# EUROPÄISCHE PATENTSCHRIFT

(11) **EP 2 920 800 B1**
(45) Veröffentlichungstag und Bekanntmachung des Hinweises auf die Patenterteilung: **16.12.2020**
(21) Anmeldenummer: 13773751.6
(22) Anmeldetag: 07.10.2013
(51) Int. Cl.: H01G 4/30, H01G 4/38

(54) **VIELSCHICHTKONDENSATOR UND VERFAHREN ZUR HERSTELLUNG EINER VIELSCHICHTKONDENSATORS**
MULTI-LAYER CAPACITOR AND METHOD FOR PRODUCTION OF A MULTI-LAYER CAPACITOR
CONDENSATEUR MULTICOUCHE ET PROCEDE DE FABRICATION D'UN CONDENSATEUR MULTICOUCHE

(30) Priorität: 15.11.2012 DE 102012111023
(43) Veröffentlichungstag der Anmeldung: 23.09.2015
(73) Patentinhaber: TDK Electronics AG, 81671 München (DE)
(72) Erfinder: SCHOSSMANN, Michael, 8530 Deutschlandsberg (AT); ENGEL, Günter, 8430 Leibnitz (AT); OBERMAIR, Stefan, 8510 Stainz (AT); DÖLLGAST, Bernhard, 8530 Deutschlandsberg (AT); KOINI, Markus, 8054 Seiersberg (AT); KONRAD, Jürgen, 8010 Graz (AT)
(74) Vertreter: Epping - Hermann - Fischer
(86) Internationale Anmeldenummer: PCT/EP2013/070820
(87) Internationale Veröffentlichungsnummer: WO 2014/075846

(56) Entgegenhaltungen:
- DE-A1- 19 709 690
- JP-A- H09 180 956
- JP-B2- 3 363 236
- US-A1- 2006 238 073
- US-A1- 2010 140 379

## Beschreibung

Es wird ein Vielschichtkondensator, insbesondere ein keramischer Vielschichtkondensator angegeben. Der Kondensator wird beispielsweise als Zwischenkreiskondensator verwendet. Insbesondere kann der Kondensator mit schnellen Halbleitern in Invertern eingesetzt werden.

Die Druckschrift JP 09-180956 A beschreibt einen Vielschichtkondensator mit keramischen Zwischenschichten. Die Druckschrift DE 19709690 A1 beschreibt ein keramisches Vielschichtbauelement mit einzelnen Schichten hoher Porosität.

Die Druckschrift JP 3 363 236 B2 beschreibt einen Vielschichtkondensator, bei dem bei der Herstellung in einer aktiven Zone Hohlräume ausgebildet sind, um mechanische Spannungen während des Sintervorgangs auszugleichen.

Die Druckschriften US 2006/238073 A1 und US 2010/140379 A1 beschreiben jeweils Piezoaktoren mit Sollbruchbereichen bzw. Spalten zum Abbau mechanischer Spannungen, die aufgrund der piezoelektrischen Verformung des Bauelements auftreten.

Es ist eine Aufgabe, einen Vielschichtkondensator und ein Verfahren zur Herstellung eines Vielschichtkondensators mit verbesserten Eigenschaften anzugeben.

Es wird ein Vielschichtkondensator angegeben, der dielektrische Schichten und dazwischen angeordnete Elektrodenschichten aufweist. Der Vielschichtkondensator weist mehrere miteinander verbundene Segmente auf, wobei zwischen den Segmenten wenigstens ein Entlastungsbereich angeordnet ist. In dem Entlastungsbereich ist die Verbindung der Segmente geschwächt oder unterbrochen.

Der Vielschichtkondensator ist monolithisch ausgebildet. Insbesondere weist der Vielschichtkondensator einen monolithischen Grundkörper auf. Der Grundkörper umfasst die dielektrischen Schichten und Elektrodenschichten. Die dielektrischen Schichten und Elektrodenschichten sind gemeinsam gesintert. Insbesondere sind die Segmente gemeinsam gesintert.

Durch den Entlastungsbereich werden vorzugsweise mechanische Spannungen im Vielschichtkondensator gering gehalten. Dabei ist die Dicke der Segmente vorzugsweise derart gering, dass mechanische Spannungen in den Segmenten nicht zur Entstehung von Rissen im Kondensator führen. Durch die Schwächung oder Unterbrechung der Verbindung der Segmente können sich die mechanischen Spannungen nicht derart addieren, dass Risse im Kondensator entstehen.

Die dielektrischen Schichten des Vielschichtkondensators sind vorzugsweise keramische Schichten. Die dielektrischen Schichten können ein piezoelektrisches oder elektrostriktives Verhalten beim Anlegen einer Spannung an den Kondensator aufweisen, so dass eine Dehnung der dielektrischen Schichten auftritt. Insbesondere bei einer inhomogenen Dehnung der dielektrischen Schichten können mechanische Spannungen im Kondensator auftreten. Aufgrund der Entlastungsbereiche können auch Materialien mit hohen Dehnungswerten für einen monolithischen Vielschichtkondensator mit hohem Kapazitätswert verwendet werden. Insbesondere kann der Vielschichtkondensator eine große Dicke aufweisen, ohne dass kritische mechanische Spannungen entstehen. Somit kann ein Vielschichtkondensator gebildet werden, der in der Dicke und somit auch in seinem Kapazitätswert nicht beschränkt ist.

In einer Ausführungsform weisen die dielektrischen Schichten ein anti-ferroelektrisches Material auf. Beispielsweise weisen die dielektrischen Schichten Blei-Lanthanum-Zirkon Titanat (PLZT) auf. In einer alternativen Ausführungsform weisen die dielektrischen Schichten ein ferroelektrisches Material, beispielsweise eine ferroelektrische Keramik basierend auf Bariumtitanat auf.

Vorzugsweise weist der Vielschichtkondensator wenigstens eine Außenkontaktierung zur Kontaktierung wenigstens einer Elektrodenschicht auf. Beispielsweise weist der Vielschichtkondensator zwei Außenkontaktierungen zur Kontaktierung wenigstens einer ersten und einer zweiten Elektrodenschicht auf. Die Außenkontaktierungen können auf gegenüberliegenden Außenseiten des Grundkörpers angeordnet sein.

Beispielsweise überlappen sich die ersten und zweiten Elektrodenschichten nicht. Eine erste und zweite Elektrodenschicht kann in einer gemeinsamen Ebene angeordnet sein.

Vorzugsweise weist der Vielschichtkondensator wenigstens eine dritte Elektrodenschicht auf, die von keiner der Außenkontaktierungen kontaktiert wird. Eine derartige Elektrode wird auch als "floating" Elektrode bezeichnet, auf Deutsch "schwebende" Elektrode. Die dritte Elektrodenschicht kann mit der ersten und/oder der zweiten Elektrodenschicht überlappen. Vorzugsweise überlappt die dritte Elektrodenschicht mit der ersten und der zweiten Elektrodenschicht.

Vorzugsweise weist der Vielschichtkondensator und insbesondere jedes Segment des Vielschichtkondensators eine Vielzahl erster Elektrodenschichten, eine Vielzahl zweiter Elektrodenschichten und eine Vielzahl dritter Elektrodenschichten auf.

In einer Ausführungsform weist der Kondensator wenigstens eine Serienschaltung zweier Kapazitäten auf. Insbesondere kann eine erste Kapazität durch die Überlappung wenigstens einer ersten Elektrodenschicht mit wenigstens einer dritten Elektrodenschicht und eine zweite Kapazität durch die Überlappung wenigstens einer zweiten Elektrodenschicht mit wenigstens einer dritten Elektrodenschicht gebildet werden.

Der Entlastungsbereich ist erfindungsgemäß vollständig oder zumindest hauptsächlich in einer inaktiven Zone des Stapels angeordnet. In einer inaktiven Zone des Stapels tritt keine Überlappung einer Elektrodenschicht mit einer Gegenelektrode auf. Somit trägt die inaktive Zone nicht zur Kapazität des Vielschichtkondensators bei.

Beispielsweise sind in der inaktiven Zone in Stapelrichtung gesehen nur Elektrodenschichten einer Sorte vorhanden, beispielsweise nur erste Elektrodenschichten, nur zweite Elektrodenschichten oder nur dritte Elektrodenschichten. Alternativ kann die inaktive Zone auch vollständig frei von Elektrodenschichten sein. Vorzugsweise deckt der Entlastungsbereich alle inaktiven Zonen ab.

In einer Ausführungsform ist wenigstens ein Entlastungsbereich zumindest teilweise in einem Bereich des Kondensators angeordnet, in dem eine dritte Elektrodenschicht weder mit einer ersten noch einer zweiten Elektrodenschicht überlappt. Somit sind in diesem Bereich nur dritte Elektrodenschichten angeordnet. Beispielsweise befindet sich der Entlastungsbereich zwischen zwei dritten Elektrodenschichten. Zusätzlich oder alternativ dazu kann wenigstens ein Entlastungsbereich zumindest teilweise in einem Bereich angeordnet sein, in dem nur erste oder zweite Elektrodenschichten angeordnet sind. Zusätzlich oder alternativ dazu kann wenigstens ein Entlastungsbereich zumindest teilweise in einem Bereich angeordnet sein, der frei von Elektrodenschichten ist. Insbesondere ist dieser Bereich in Stapelrichtung gesehen frei von Elektrodenschichten.

Der Entlastungsbereich kann sich auch in einen Bereich hinein erstrecken, in dem eine Überlappung von Elektrodenschichten unterschiedlicher Sorte, insbesondere eine Überlappung einer Elektrodenschicht mit einer Gegenelektrode, auftritt. Derartige Bereiche werden als aktive Zonen bezeichnet, da sie zur Kapazität des Kondensators beitragen. Beispielsweise überlappen in einer ersten aktiven Zone erste und dritte Elektrodenschichten und in einer zweiten aktiven Zone zweite und dritte Elektrodenschichten. Die Entlastungsbereiche erstrecken sich vorzugsweise so weit in die aktive Zone hinein wie in der aktiven Zone eine inhomogene Dehnung beim Anlegen einer elektrischen Spannung auftritt. In Bereichen, in denen eine homogene Dehnung auftritt, sind die Segmente vorzugsweise fest miteinander verbunden, insbesondere fest miteinander versintert. Vorzugsweise sind Entlastungsbereiche wenigstens in den Bereichen zwischen zwei Segmenten angeordnet, in denen eine inhomogene Dehnung der dielektrischen Schichten auftritt.

In einer Ausführungsform ist der Entlastungsbereich strukturiert. Insbesondere kann der Entlastungsbereich wenigstens eine Aussparung aufweisen. Beispielsweise ist in der Aussparung ein Verbindungsbereich gebildet, in dem die Segmente fest miteinander verbunden, insbesondere fest miteinander versintert sind.

In einer Ausführungsform ist der Entlastungsbereich in einer Ebene parallel zu den Elektrodenschichten zumindest in allen Bereichen des Grundkörpers angeordnet, die an die Außenseiten angrenzen. Der Entlastungsbereich kann Verbindungsbereiche umschließen, die vollständig im Inneren des Grundkörpers angeordnet sind und somit zu keiner der Außenseiten reichen.

In einer Ausführungsform sind wenigstens drei Entlastungsbereiche zwischen zwei miteinander verbundenen Segmenten vorgesehen. Insbesondere können die Entlastungsbereiche in einer gemeinsamen Ebene liegen. Vorzugsweise ist ein Entlastungsbereich in jeder inaktiven Zone angeordnet. Die Entlastungsbereiche können auch miteinander verbunden sein. Mehrere Entlastungsbereiche, die in einer Ebene angeordnet sind können auch als ein einziger, strukturierter Entlastungsbereich angesehen werden.

In einer Ausführungsform ist wenigstens ein Entlastungsbereich vorgesehen, der an keine der Außenkontaktierungen angrenzt. Beispielsweise ist der Entlastungsbereich zumindest teilweise in einer inaktiven Zone angeordnet, die nicht an die Außenkontaktierungen angrenzt. Zusätzlich oder alternativ dazu kann wenigstens ein Entlastungsbereich an eine der Außenkontaktierungen angrenzen.

Der Entlastungsbereich kann als Spalt zwischen den Segmenten ausgebildet sein. Insbesondere können die dielektrischen Schichten der verschiedenen Segmente im Entlastungsbereich voneinander beabstandet sein. Die dielektrischen Schichten können im Entlastungsbereich auch aneinander anliegen und nicht oder nur teilweise oder nur mit verminderter Haftfestigkeit miteinander verbunden sein.

Weiterhin wird ein Verfahren zur Herstellung eines derartigen Vielschichtkondensators angegeben. Dabei werden Grünfolien, insbesondere keramische Grünfolien, zur Ausbildung der dielektrischen Schichten bereitgestellt. Auf wenigstens einer Grünfolie wird eine Paste aufweisend ein organisches Material aufgebracht, beispielsweise aufgedruckt. Die Paste aufweisend das organische Material wird nur an den Stellen aufgetragen, an denen Entlastungsbereiche vorgesehen sind. Auf weitere Grünfolien wird vorzugsweise eine Paste für ein Elektrodenmaterial aufgedruckt. Die Grünfolien werden zu einem Stapel angeordnet, der gesintert wird. Vorzugsweise ist die Paste aufweisend das organische Material derart ausgebildet, dass an den Stellen, an denen die Paste aufgetragen wird, ein Zusammensintern der dielektrischen Schichten ganz oder teilweise verhindert wird, so dass hier ein Entlastungsbereich gebildet wird.

Im Folgenden werden die hier beschriebenen Gegenstände anhand von schematischen und nicht maßstabsgetreuen Ausführungsbeispielen näher erläutert.

Es zeigen:
- Figur 1: ein schematisches Schnittbild eines Vielschichtkondensators,
- Figur 2: im Querschnitt den Vielschichtkondensator aus Figur 1,
- Figur 3: in einer Weibull-Verteilung Durchbruchsspannungen bei einem Vielschichtkondensator aufweisend Entlastungsbereiche.

Vorzugsweise verweisen in den folgenden Figuren gleiche Bezugszeichen auf funktionell oder strukturell entsprechende Teile der verschiedenen Ausführungsformen.

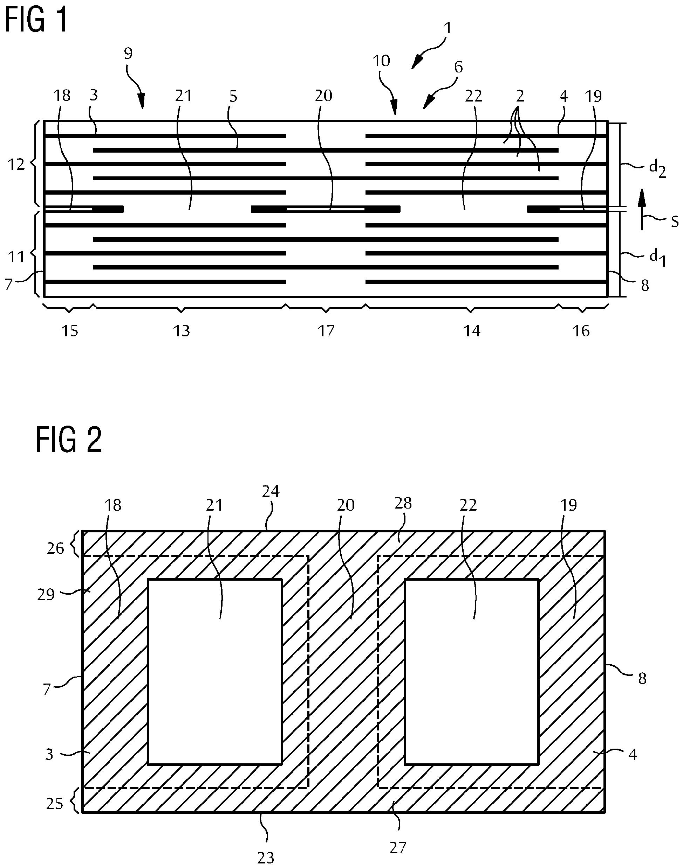

Figur 1 zeigt ein schematisches Schnittbild eines Vielschichtkondensators 1. Der Vielschichtkondensator 1 weist einen Grundkörper 6 mit übereinander gestapelten dielektrische Schichten 2 und dazwischen angeordneten Elektrodenschichten 3, 4, 5 auf. Der Grundkörper 6 ist ein monolithischer Sinterkörper.

Die dielektrischen Schichten 2 sind vorzugsweise als keramische Schichten ausgebildet. Insbesondere können die dielektrischen Schichten 2 ein anti-ferroelektrisches Material aufweisen. Beispielsweise weisen die dielektrischen Schichten 2 Blei-Lanthanum-Zirkon-Titanat (PLZT) auf. Alternativ können die dielektrischen Schichten 2 auch ein ferroelektrisches Material, beispielsweise basierend auf Bariumtitanat, aufweisen. Die dielektrischen Schichten 2 können ein piezoelektrisches oder elektrostriktives Verhalten aufweisen, so dass beim Anlegen einer Spannung an den Vielschichtkondensator 1 eine Dehnung der piezoelektrischen Schichten 2 auftritt.

Die Elektrodenschichten 3, 4, 5 umfassen erste und zweite Elektrodenschichten 3, 4, die mit Außenkontaktierungen (nicht abgebildet) elektrisch verbunden sind. Die Außenkontaktierungen sind an einer ersten bzw. zweiten Außenseite 7, 8 des Grundkörpers 6. Die ersten und zweiten Elektrodenschichten 3, 4 überlappen in Stapelrichtung S gesehen nicht.

Weiterhin umfassen die Elektrodenschichten 3, 4, 5 dritte Elektrodenschichten 5, die mit keiner der Außenkontaktierungen verbunden sind. Die dritten Elektrodenschichten 5 überlappen mit den ersten und den zweiten Elektrodenschichten 3, 4. Durch diese Anordnung wird eine Serienschaltung zweier Kapazitäten 9, 10 gebildet. Bei der ersten Kapazität 9 bilden die dritten Elektrodenschichten 5 die Gegenelektroden zu den ersten Elektrodenschichten 3, bei der zweiten Kapazität 10 bilden die dritten Elektrodenschichten 5 die Gegenelektroden zu den zweiten Elektrodenschichten 4.

Die Bereiche des Vielschichtkondensators 1, in denen in Stapelrichtung S gesehen eine Überlappung einer Elektrodenschicht 3, 4 mit einer Gegenelektrode auftritt werden als aktive Zonen 13, 14 bezeichnet. Die Bereiche, in denen keine Überlappung der Elektrodenschichten 3, 4 mit einer Gegenelektrode auftritt, werden als inaktive Zonen 15, 16, 17 bezeichnet. Eine erste und eine zweite inaktive Zone 15, 16 grenzt jeweils an eine Außenseite 7, 8 an, an der eine Außenkontaktierung angeordnet ist. Eine dritte inaktive Zone 17 ist zwischen der ersten und zweiten Kapazität 9, 10 angeordnet und grenzt an keine Außenkontaktierung an.

Der Vielschichtkondensator 1 weist zwei übereinander angeordnete Segmente 11, 12 auf. Die Segmente 11, 12 können eine identische Anordnung von Elektrodenschichten 3, 4, 5 aufweisen. Die obersten Elektrodenschichten 3, 4 des ersten Segments 11 weisen die selbe Polarität auf wie die darüber liegenden untersten Elektrodenschichten 3, 4 des zweiten Segments 12. Zwischen den Segmenten 11, 12 sind keine dritten Elektrodenschichten 5 angeordnet. Somit trägt der Bereich zwischen den Segmenten nicht zur Kapazität des Vielschichtkondensators 1 bei.

Zwischen den Segmenten 11, 12 sind Entlastungsbereiche 18, 19, 20 vorgesehen. In den Entlastungsbereichen 18, 19, 20 sind die Segmente 11, 12 nicht oder nur mit reduzierter Haftfestigkeit verbunden. Die Entlastungsbereiche 18, 19, 20 sind in den inaktiven Zonen 15, 16, 17 vorgesehen und erstrecken sich ein Stück weit in die angrenzenden aktiven Zonen 13, 14 hinein. Weiterhin sind zwischen den Segmenten 11, 12 Verbindungsbereiche 21, 22 vorgesehen, die zwischen den Entlastungsbereichen 18, 19, 20 angeordnet sind. In den Verbindungsbereichen 21, 22, sind die Segmente 11, 12 fest miteinander verbunden, insbesondere zusammengesintert. Insbesondere sind in den Verbindungsbereichen 21, 22 aneinander angrenzende piezoelektrische Schichten 2 der Segmente 11, 12 direkt miteinander verbunden.

Durch die Ausbildung der Entlastungsbereiche 18, 19, 20 können mechanische Spannungen im Vielschichtkondensator 1 reduziert werden. Derartige Spannungen treten bei dielektrischen Schichten 2, die eine piezoelektrische Dehnung im elektrischen Feld aufweisen, in den Übergangsbereichen zwischen den aktiven Zonen 13, 14 und den inaktiven Zonen 15, 16, 17 auf. Insbesondere können bei einem Aufbau eines elektrischen Feldes in den aktiven Zonen 13, 14 mechanische Zugbeanspruchungen in den Übergangsbereichen auftreten. Wenn diese mechanischen Spannungen eine kritische Grenze übersteigen, können Risse in den Übergangsbereichen entstehen, die sich in die aktiven Zonen 13, 14 und die inaktiven Zonen 15, 16, 17 ausbreiten können, so dass insbesondere Elektroden unterschiedlicher Polarität mit dem Riss verbunden werden. Beim Anlegen einer hohen Spannung kann entlang dieses Risses ein elektrischer Durchbruch erfolgen, der zur Zerstörung des Vielschichtkondensators 1 führen kann.

Aufgrund der Entlastungsbereiche 18, 19, 20 wird der Vielschichtkondensator 1 derart in die einzelnen Segmente 11, 12 unterteilt, dass mechanische Spannungen unterhalb der für eine Rissentstehung kritischen Spannungen bleiben.

Insbesondere weisen die Segmente 11, 12 hinreichend geringe Dicken d₁, d₂ in Stapelrichtung auf, so dass die mechanischen Spannungen nicht zur Entstehung von Rissen führen. Die Dicken d₁, d₂ liegen beispielsweise jeweils zwischen 1,0 mm und 1,6 mm, z. B. bei 1,3 mm. Die Gesamtdicke des Vielschichtkondensators 1 ist bei zwei Segmenten die doppelte Dicke eines einzelnen Segments 11, 12, beispielsweise liegt die Gesamtdicke bei 2,6 mm.

In weiteren Ausführungsformen können auch mehr als zwei Segmente übereinander angeordnet sein. Zwischen den Segmenten sind vorzugsweise jeweils Entlastungsbereiche angeordnet. Insbesondere können sich Entlastungsbereiche an verschiedenen Positionen entlang der Stapelrichtung S befinden.

Die Entlastungsbereiche 18, 19, 20 erstrecken sich vorzugsweise so weit in die aktiven Zonen 13, 14 hinein wie in der aktiven Zone 13, 14 eine inhomogene Dehnung beim Anlegen einer elektrischen Spannung auftritt. Als Faustregel gilt hier, dass sich ein Entlastungsbereich 18, 19, 20 um die Breite der inaktiven Zone 15, 16, 17, d.h. die Erstreckung der inaktiven Zone entlang einer Verbindungsgeraden zwischen den Außenkontaktierungen, in die aktive Zone 13, 14 hinein erstreckt. In dem Fall, in dem sich zwei Kapazitäten 9, 10 eine inaktive Zone 17 teilen, ist es ausreichend, dass sich der Entlastungsbereich 20 jeweils um die halbe Breite der inaktiven Zone 17 in die angrenzenden aktiven Zonen 13, 14 erstreckt.

Die Entlastungsbereiche 18, 19, 20 können als Spalte ausgebildet sein. In den Entlastungsbereichen 18, 19, 20 können die Segmente 11, 12 vollständig unverbunden oder nur teilweise miteinander verbunden sein.

Zur Ausbildung der Entlastungsbereiche 18, 19, 20 können Grünfolien, die ein keramisches Material enthalten und aus denen die dielektrischen Schichten 2 gebildet werden, bereichsweise mit einer Paste aufweisend ein organisches Material bedruckt werden. Zum Bedrucken kann ein Siebdruckverfahren verwendet werden. Die Paste kann vollständig aus organischem Material gebildet sein. Die Paste kann auch ein organisches Material und einen geringen Anteil an Keramik aufweisen. Beispielsweise wird eine Schicht der Paste mit einer Dicke von 0,5 bis 10 µm, vorzugsweise zwischen 1 und 3 µm aufgetragen. Dadurch wird bei einem Laminierungsprozess mit anschließendem Verpressen das in den Grünfolien enthaltene keramische Material nicht dicht aufeinander gepresst. Insbesondere kann verhindert werden, dass sich die Keramikteilchen benachbarter Grünfolien berühren. In einem Entbinderungsprozess wird das keramische Material ausgebrannt, so dass ein Spalt zwischen den Keramikteilchen verbleibt. In einem anschließenden Sinterungsprozess werden die Keramikteilchen hier nur ungenügend oder überhaupt nicht verbunden. Insbesondere wird ein Zusammensintern der Keramikteilchen ganz oder teilweise verhindert. Dadurch wird im gesinterten Bauteil gezielt an bestimmten Position ein Entlastungsbereich 18, 19, 20 eingebaut.

Figur 2 zeigt den Vielschichtkondensator aus Figur 1 in einem Querschnitt in der Ebene der Entlastungsbereiche 18, 19, 20 und somit in einer Ebene parallel zu den Elektrodenschichten 3, 4, 5.

Erste und zweite Elektrodenschichten 3, 4, die unterhalb der Schnittebene angeordnet sind, sind gestrichelt eingezeichnet.

Die erste Elektrodenschicht 3 grenzt an die erste Außenseite 7 an und die die zweite Elektrodenschicht 4 grenzt an die zweite Außenseite 8 an. Beide Elektrodenschichten 3, 4 sind von dritten und vierten Außenseiten 23, 24, auf denen keine Außenkontaktierungen angeordnet sind, beabstandet. Somit weist der Vielschichtkondensator 1 vierte und fünfte inaktive Zonen 25, 26 auf, in denen in Stapelrichtung gesehen keine Elektrodenschichten vorgesehen sind. In diesen inaktiven Zonen 25, 26 sind vierte und fünfte Entlastungsbereiche 27, 28 angeordnet, die sich in angrenzende aktive Bereiche hinein erstrecken. Die vierten und fünften Entlastungsbereiche 27, 28 verlaufen somit entlang den dritten und vierten Außenseiten 23, 24. Alle Entlastungsbereiche 15, 16, 17, 27, 28 sind miteinander verbunden.

Die Entlastungsbereiche 15, 16, 17, 27, 28 können auch als ein einziger, strukturierter Entlastungsbereich 29 angesehen werden, der schraffiert dargestellt ist. Der strukturierte Entlastungsbereich 29 ist somit in allen inaktiven Zonen 15, 16, 17, 25, 26 angeordnet. Die Verbindungsbereiche 21, 22 bilden zwei Aussparungen im strukturierten Entlastungsbereich 29. Der strukturierte Entlastungsbereich 29 grenzt an alle Außenseiten 7, 8, 23, 24 an, die senkrecht zu den Elektrodenschichten 3, 4 verlaufen. Insbesondere deckt der strukturierte Entlastungsbereich 29 in der Ebene des Entlastungsbereichs 29 vollständig alle an die Außenseiten 7, 8, 23, 24 angrenzenden Bereiche des Grundkörpers 6 ab. Es ist somit kein Verbindungsbereich 21, 22 vorgesehen, der an eine der Außenseiten 7, 8, 23, 24 angrenzt. Die Verbindungsbereiche 21, 22 sind vollständig vom strukturierten Entlastungsbereich 29 umschlossen.

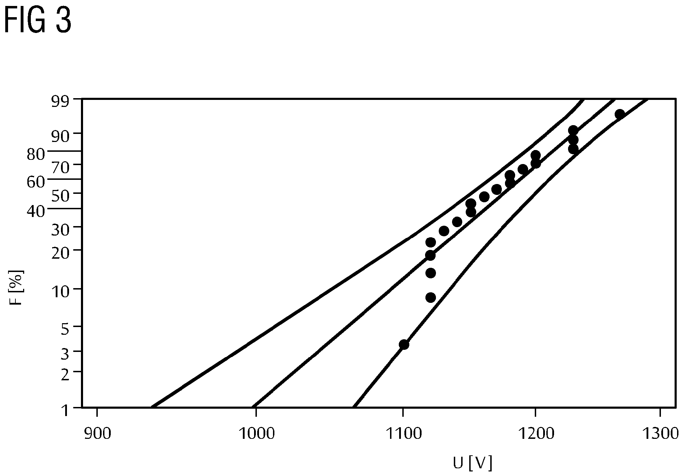

Figur 3 zeigt in einer Weibull-Verteilung Durchbruchsspannungen bei einem Vielschichtkondensator 1 gemäß Figur 1. Insbesondere ist die Ausfallhäufigkeit F in % gegen die angelegte Spannung U in Volt aufgetragen. Für die Weibull-Verteilung ist ein Konfidenzintervall von 95 % gewählt.

Bei einem Vielschichtkondensator, der keine Entlastungsbereiche 18, 19, 20, 27, 28 aufweist, würde die charakteristische Durchbruchspannung bei ca. 750 V liegen (nicht dargestellt). Aus der Verteilung ist deutlich zu erkennen, dass bei einem Vielschichtkondensator 1 aufweisend die Entlastungsbereiche 18, 19, 20, 27, 28 die charakteristische Durchbruchspannung bei deutlich höheren Werten liegt.

Dadurch weist der Vielschichtkondensator 1 die notwendige Robustheit für last- oder auch fehlerbedingte Überspannungen insbesondere in einem Anwendungsbereich, bei dem der Vielschichtkondensator 1 mit schnellen Halbleitern in Invertern zusammenspielt, auf. Die Spannungsfestigkeit der Halbleiter für Operations- bzw. Zwischenkreisspannungen bei 400 V liegt üblicherweise bei 600 bis 650 Volt. Daher werden diese im Überlast- bzw. Fehlerfall meist abgeschaltet, so dass die Spannung am Kondensator steigt. Im ungünstigen Fall kann dies beispielsweise bis zu 750 Volt sein, so dass eine Durchbruchspannung des Kondensators von Vorteil ist, die bei einem deutlich höheren Wert liegt.

### Bezugszeichenliste

- 1: Vielschichtkondensator
- 2: dielektrische Schicht
- 3: erste Elektrodenschicht
- 4: zweite Elektrodenschicht
- 5: dritte Elektrodenschicht
- 6: Grundkörper
- 7: erste Außenseite
- 8: zweite Außenseite
- 9: erste Kapazität
- 10: zweite Kapazität
- 11: erstes Segment
- 12: zweites Segment
- 13: erste aktive Zone
- 14: zweite aktive Zone
- 15: erste inaktive Zone
- 16: zweite inaktive Zone
- 17: dritte inaktive Zone
- 18: erster Entlastungsbereich
- 19: zweiter Entlastungsbereich
- 20: dritter Entlastungsbereich
- 21: erster Verbindungsbereich
- 22: zweiter Verbindungsbereich
- 23: dritte Außenseite
- 24: vierte Außenseite
- 25: vierte inaktive Zone
- 26: fünfte inaktive Zone
- 27: vierter Entlastungsbereich
- 28: fünfter Entlastungsbereich
- 29: strukturierter Entlastungsbereich

- d₁: Dicke des ersten Segments
- d₂: Dicke des zweiten Segments
- S: Stapelrichtung
- F: Ausfallhäufigkeit
- U: Spannung

## Patentansprüche

1. Vielschichtkondensator,
aufweisend mehrere miteinander verbundene Segmente (11, 12), wobei jedes Segment (11, 12) dielektrische Schichten (2) und dazwischen angeordnete Elektrodenschichten (3, 4, 5) aufweist, wobei die Segmente (11, 12) übereinander angeordnet sind und gemeinsam gesintert sind, wobei zwischen den Segmenten (11, 12) wenigstens ein Verbindungsbereich (21, 22) angeordnet ist, in dem die Segmente (11, 12) fest miteinander verbunden sind, und wobei zwischen den Segmenten (11, 12) wenigstens ein Entlastungsbereich (18, 19, 20, 27, 28, 29) vorgesehen ist, in dem die Segmente (11, 12) nicht miteinander verbunden sind oder in dem die Verbindung der Segmente (11, 12) geschwächt ist, wobei der Entlastungsbereich (18, 19, 20, 27, 28, 29) vollständig oder zumindest hauptsächlich in einer inaktiven Zone (15, 16, 17, 25, 26) angeordnet ist,
und der Verbindungsbereich (21, 22) in einer aktiven Zone (13, 14) angeordnet ist.

2. Vielschichtkondensator nach Anspruch 1,
aufweisend wenigstens eine erste und eine zweite Elektrodenschicht (3, 4) und Außenkontaktierungen zur Kontaktierung der ersten und zweiten Elektrodenschicht (3, 4), wobei der Vielschichtkondensator wenigstens eine dritte Elektrodenschicht (5) aufweist, die von keiner der Außenkontaktierungen kontaktiert ist.

3. Vielschichtkondensator nach Anspruch 2,
wobei die dritte Elektrodenschicht (5) mit der ersten und der zweiten Elektrodenschicht (3, 4) überlappt.

4. Vielschichtkondensator nach einem der Ansprüche 1 bis 3, wobei der Entlastungsbereich (18, 19, 20, 27, 28, 29) sich zumindest teilweise in eine aktive Zone (13, 14) hinein erstreckt.

5. Vielschichtkondensator nach einem der Ansprüche 1 bis 4, bei dem wenigstens drei Entlastungsbereiche (18, 19, 20, 27, 28) zwischen den zwei Segmenten (11, 12) vorgesehen sind.

6. Vielschichtkondensator nach einem der Ansprüche 1 bis 5, aufweisend Außenkontaktierungen zur Kontaktierung wenigstens einer der Elektrodenschichten (3, 4), wobei wenigstens ein Entlastungsbereich (20) an keine der Außenkontaktierungen angrenzt.

7. Vielschichtbauelement nach einem der Ansprüche 1 bis 6, bei dem der Entlastungsbereich (29) in einer Ebene parallel zu den Elektrodenschichten (3, 4, 5) zumindest in allen an Außenseiten (7, 8, 23, 24) angrenzenden Bereichen angeordnet ist.

8. Vielschichtbauelement nach einem der Ansprüche 1 bis 7, bei dem der Verbindungsbereich vollständig im Inneren des Grundkörpers angeordnet ist und zu keiner Außenseite reicht.

9. Vielschichtkondensator nach einem der Ansprüche 1 bis 8, bei dem der Entlastungsbereich (18, 19, 20) als Spalt zwischen den Segmenten (11, 12) ausgebildet ist.

10. Vielschichtkondensator nach einem der Ansprüche 1 bis 9, bei dem die dielektrischen Schichten (2) ein anti-ferroelektrisches Material aufweisen.

11. Vielschichtkondensator nach Anspruch 10,
bei dem die dielektrischen Schichten (2) Blei-Lanthanum-Zirkon-Titanat aufweisen.

12. Verfahren zur Herstellung eines Vielschichtkondensators nach einem der Ansprüche 1 bis 11, aufweisend die Schritte
A) Bereitstellen von Grünfolien zur Ausbildung der dielektrischen Schichten (2),
B) Aufbringen eine Paste aufweisend ein organisches Material auf wenigstens eine der Grünfolien, wobei die Paste nur an den Stellen aufgetragen wird, an denen ein Entlastungsbereich vorgesehen ist,
C) Anordnen der Grünfolien zu einem Stapel,
D) Sintern des Stapels.

13. Verfahren nach Anspruch 12,
wobei die Paste derart ausgebildet ist, dass an den Stellen, an denen die Paste in Schritt B) aufgetragen wird, ein Zusammensintern der dielektrischen Schichten (2) ganz oder teilweise verhindert wird.

## Claims

1. Multi-layer capacitor,
comprising a plurality of segments (11, 12) which are connected to one another, wherein each segment (11, 12) comprises dielectric layers (2) and electrode layers (3, 4, 5) arranged therebetween, wherein the segments (11, 12) are arranged above one another and are sintered together, wherein, between the segments (11, 12), there is arranged at least one connection region (21, 22) in which the segments (11, 12) are fixedly connected to one another, and wherein, between the segments (11, 12), there is provided at least one relief region (18, 19, 20, 27, 28, 29) in which the segments (11, 12) are not connected to one another or in which the connection between the segments (11, 12) is weakened, wherein the relief region (18, 19, 20, 27, 28, 29) is arranged completely or at least primarily in an inactive zone (15, 16, 17, 25, 26),
and the connection region (21, 22) is arranged in an active zone (13, 14).

2. Multi-layer capacitor according to Claim 1, comprising at least a first and a second electrode layer (3, 4) and external contact-making means for contact-connecting the first and second electrode layers (3, 4), wherein the multi-layer capacitor comprises at least a third electrode layer (5), which is not contact-connected by any of the external contact-making means.

3. Multi-layer capacitor according to Claim 2, wherein the third electrode layer (5) overlaps with the first and the second electrode layer (3, 4).

4. Multi-layer capacitor according to one of Claims 1 to 3,
wherein the relief region (18, 19, 20, 27, 28, 29) extends at least partially into an active zone (13, 14).

5. Multi-layer capacitor according to one of Claims 1 to 4,
in which at least three relief regions (18, 19, 20, 27, 28) are provided between the two segments (11, 12).

6. Multi-layer capacitor according to one of Claims 1 to 5,
comprising external contact-making means for contact-connecting at least one of the electrode layers (3, 4), wherein at least one relief region (20) does not adjoin any of the external contact-making means.

7. Multi-layer component according to one of Claims 1 to 6,
in which the relief region (29) is arranged in a plane parallel to the electrode layers (3, 4, 5) at least in all regions which adjoin outer sides (7, 8, 23, 24).

8. Multi-layer component according to one of Claims 1 to 7,
in which the connection region is arranged entirely within the main body and does not reach as far as any of the outer sides.

9. Multi-layer capacitor according to one of Claims 1 to 8,
in which the relief region (18, 19, 20) is configured in the form of a gap between the segments (11, 12).

10. Multi-layer capacitor according to one of Claims 1 to 9,
in which the dielectric layers (2) comprise an antiferroelectric material.

11. Multi-layer capacitor according to Claim 10,
in which the dielectric layers (2) comprise lead lanthanum zirconium titanate.

12. Method for producing a multi-layer capacitor according to one of Claims 1 to 11, comprising the steps of
A) providing green sheets for forming the dielectric layers (2),
B) applying a paste comprising an organic material to at least one of the green sheets, wherein the paste is applied only at those points at which a relief region is provided,
C) arranging the green sheets to form a stack,
D) sintering the stack.

13. Method according to Claim 12,
wherein the paste is formed in such a manner that the dielectric layers (2) are prevented completely or partially from sintering together at the points at which the paste is applied in step B).

## Revendications

1. Condensateur multicouche, comprenant plusieurs segments (11, 12) reliés entre eux, chaque segment (11, 12) possédant des couches diélectriques (2) et des couches d'électrode (3, 4, 5) disposées entre celles-ci, les segments (11, 12) étant disposés les uns au-dessus des autres et étant frittés en commun, au moins une zone de liaison (21, 22) étant disposée entre les segments (11, 12), dans laquelle les segments (11, 12) sont reliés solidement entre eux, et au moins une zone de détente (18, 19, 20, 27, 28, 29) se trouvant entre les segments (11, 12), dans laquelle les segments (11, 12) ne sont pas reliés entre eux ou dans laquelle la liaison des segments (11, 12) est affaiblie, la zone de détente (18, 19, 20, 27, 28, 29) étant disposée entièrement ou au moins principalement dans une zone inactive (15, 16, 17, 25, 26), et la zone de liaison (21, 22) étant disposée dans une zone active (13, 14).

2. Condensateur multicouche selon la revendication 1, possédant au moins une première et une deuxième couche d'électrode (3, 4) et des éléments de mise en contact externes destinés à entrer en contact avec la première et la deuxième couche d'électrode (3, 4), le condensateur multicouche possédant au moins une troisième couche d'électrode (5) avec laquelle le contact n'est établi par aucun des éléments de mise en contact externes.

3. Condensateur multicouche selon la revendication 2, la troisième couche d'électrode (5) chevauchant la première et la deuxième couche d'électrode (3, 4).

4. Condensateur multicouche selon l'une des revendications 1 à 3, la zone de détente (18, 19, 20, 27, 28, 29) s'étendant au moins partiellement à l'intérieur d'une zone active (13, 14).

5. Condensateur multicouche selon l'une des revendications 1 à 4, dans lequel au moins trois zones de détente (18, 19, 20, 27, 28) sont présentes entre les deux segments (11, 12).

6. Condensateur multicouche selon l'une des revendications 1 à 5, possédant des éléments de mise en contact externes destinés à entrer en contact avec au moins l'une des couches d'électrode (3, 4), au moins une zone de détente (20) n'étant adjacente d'aucun des éléments de mise en contact.

7. Condensateur multicouche selon l'une des revendications 1 à 6, dans lequel la zone de détente (29) est disposée dans un plan parallèle aux couches d'électrode (3, 4, 5) au moins dans toutes les zones adjacentes aux côtés extérieurs (7, 8, 23, 24).

8. Condensateur multicouche selon l'une des revendications 1 à 7, dans lequel la zone de liaison est disposée entièrement à l'intérieur du corps de base et n'atteint aucun côté extérieur.

9. Condensateur multicouche selon l'une des revendications 1 à 8, dans lequel la zone de détente (18, 19, 20) est réalisée sous la forme d'un interstice entre les segments (11, 12).

10. Condensateur multicouche selon l'une des revendications 1 à 9, dans lequel les couches diélectriques (2) possèdent un matériau anti-ferroélectrique.

11. Condensateur multicouche selon la revendication 10, dans lequel les couches diélectriques (2) possèdent du plomb-lanthane-zircon-titane.

12. Procédé de fabrication d'un condensateur multicouche selon l'une des revendications 1 à 11, comprenant les étapes suivantes
a) fourniture de feuilles crues destinées à la formation des couches diélectriques (2),
b) application d'une pâte possédant un matériau organique sur au moins l'une des feuilles crues, la pâte n'étant appliquée qu'aux endroits auxquels se trouve une zone de détente,
c) disposition des feuilles crues en une pile,
d) frittage de la pile.

13. Procédé selon la revendication 12, la pâte étant configurée de telle sorte qu'aux endroits où la pâte est appliquée à l'étape b), un frittage des couches diélectriques (2) entre elles est entièrement ou partiellement empêché.
